# EUROPÄISCHE PATENTSCHRIFT

(11) **EP 3 904 041 B1**
(45) Veröffentlichungstag und Bekanntmachung des Hinweises auf die Patenterteilung: **26.03.2025**
(21) Anmeldenummer: 21169942.6
(22) Anmeldetag: 22.04.2021
(51) Int. Cl.: B29C 48/08, B29C 48/13, B29B 17/00, B29B 17/02, B32B 3/00, B32B 27/32, B29C 59/02

(54) **VERFAHREN ZUR HERSTELLUNG EINER GENARBTEN FOLIE ODER EINES GENARBTEN, MEHRLAGIGEN FOLIENLAMINAT**
PROCESS FOR PRODUCING A GRAINED FILM OR A GRAINED, MULTI-LAYER FILM LAMINATE
PROCÉDÉ DE FABRICATION D'UN FILM GRAINÉ OU D'UN FILM STRATIFIÉ MULTICOUCHE GRAINÉ

(30) Priorität: 30.04.2020 DE 102020205462
(43) Veröffentlichungstag der Anmeldung: 03.11.2021
(73) Patentinhaber: Benecke-Kaliko AG, 30419 Hannover (DE)
(72) Erfinder: Mani, Joseph, 30419 Hannover (DE); Rost, Eberhard, 30419 Hannover (DE); Torber, Karsten, 30419 Hannover (DE)
(74) Vertreter: Continental Corporation

(56) Entgegenhaltungen:
- EP-A1- 1 683 829
- EP-A1- 3 554 809
- EP-B1- 1 688 460
- US-A- 3 723 582
- US-A1- 2004 043 170
- US-A1- 2010 244 295
- US-B2- 6 828 384
- US-B2- 9 669 600

## Beschreibung

Die Erfindung betrifft ein Verfahren zur Herstellung einer genarbten Folie oder eines genarbten, mehrlagigen Folienlaminates mit einer Oberfolie und zumindest einer Unterfolie oder zumindest einem Polyolefin basierten Schaum, das das Bilden einer Polymermasse unter Einbezug eines Polyolefinrezyklats, das Formen der Masse zu einer Folie und das Verbinden der Folie mit einer Unterfolie oder einem Polyolefinschaum beinhaltet. Anschließend wird eine Narbe auf die Folie aufgebracht. Die vorliegende Erfindung betrifft weiterhin nach einem derartigen Verfahren hergestellte genarbte Polymerfolien und deren Verwendung als Kunstleder, insbesondere in Automobil- oder Bekleidungsanwendungen.

### Stand der Technik

Aus dem Stand der Technik sind beispielsweise die Dokumente US 6 828 384 B2 und US 9 669 600 B2 bekannt. Kunstleder spielen heute in der Automobil- und Bekleidungsindustrie eine wesentliche Rolle, da insbesondere der Bedarf an Oberflächenbezügen für Automobilanwendungen so groß ist, dass er nicht mehr durch natürliches Leder gedeckt werden könnte.

Kunstleder bestehen in der Regel aus einem Verbund aus einem textilen Grundträger (z.B. Gewebe) und einer Kunststoffdeckschicht, die, z.B. zur Vermittlung des für Leder typischen optischen Oberflächeneindrucks der Haarseite von natürlichem Leder, mit einer entsprechenden Narbe versehen sein kann. Eine solche Narbe kann, abhängig von dem für das Kunstleder verwendeten Oberflächenmaterial, entweder aufgeprägt, oder bereits bei der Herstellung der Oberflächenfolie durch ein entsprechendes Negativ, auf das ein flüssiger Vorläufer der Oberflächenfolie aufgebracht und dann ausgehärtet wird, generiert werden.

Kunstleder, bei denen die Oberflächenfolie durch Polyolefin-haltige Materialien gebildet wird werden oft vernetzt, um die Stabilität der Oberflächenfolie und einer darauf generierten Narbe gegenüber einer deformierenden Verarbeitung, wie sie bei Tiefziehprozessen auftritt, zu verbessern. Ein Verfahren zu Herstellung solcher Kunstleder ist z.B. in der EP 1 149 858 B2 beschrieben, bei dem ein Kunstleder mit einer genarbten Polyolefinoberfolie zunächst mit Elektronenstrahlen vernetzt und anschießend in die gewünschte Form tiefgezogen wird.

Die EP 1 538 175 B1 beschreibt ein Verfahren zur Herstellung eines genarbten mehrlagigen Formkörpers mit einer genarbten Oberfolie, die mittels Elektronenstrahlen gegenüber einer Beschädigung der Narbe bei einem anschießenden Tiefziehverfahren stabilisiert wurde. Als Unterfolie wird in der EP 1 538 175 B1 ein geschäumtes Polymermaterial verwendet, dass eine Dichte von 35 bis 120 g/L und einen Gelgehalt von weniger als 80% aufweist.

Die EP 1 688 460 B1 beschreibt ein Verfahren zur Herstellung einer genarbten Folie oder eines genarbten mehrlagigen Folienlaminats mit einer Ober- und einer Unterfolie, wobei das die Deckschicht bildende Material Polyolefine und gegebenenfalls weiter Polymere und Additive (z.B. Vernetzer) enthält. Mit Hilfe von Elektronenstrahlen wird die Masse nach einem Prägeschritt zum Aufbringen einer Narbe aus einen Gelgehalt von 3 bis 15% eingestellt.

In der EP 2 263 857 A2 ist ein Verfahren beschrieben, bei dem ein Folienkörper für die Innenverkleidung von Kraftfahrzeugen aus einem Ausgangmaterial, das unvernetzte Polyolefine und unvernetzte Ionomere enthält, hergestellt wird und anschließend zur Generierung der Nabe einem narbgebenden Negativ-Tiefziehverfahren unterzogen wird, wobei die Folie in eine Bauteilform tiefgezogen wird, welche das gewünschte Narbbild als Negativ enthält.

Bei der weiteren Verarbeitung der so hergestellten Kunstleder und Folien lassen sich, trotz der inzwischen in der Regel durch Computer unterstützten Planung des Zuschneidens von Kunstledern, z.B. für Innenraumanwendungen in Fahrzeugen Abfälle nicht vermeiden, da es selbst bei bester Planung nicht möglich ist benötigte Kunstlederstücke so auf eine vorgegebene Kunstlederbahn zu verteilen, dass keine Reste entstehen. Zudem kann es bei der industriellen Produktion der Folienbahnen immer wieder zu Produktionsfehlern oder Produkten kommen, die vom Abnehmer vorgegebene Qualitätskriterien und -vorgaben nicht erfüllen. Aufgrund dieser im Produktionsprozess fast unvermeidlichen Abfälle, die zu ansteigenden Beeinträchtigung der Umwelt führen, ist die Kunststoffindustrie heute deutlicher Kritik ausgesetzt. Es besteht daher ein Bedarf für Maßnahmen, mit denen die entsprechenden Abfälle entweder minimiert, oder recycelt und so in den Produktkreislauf zurückgeführt werden können.

Eine Problematik bei den vorbeschriebenen Kunstledern besteht darin, dass sie in der Regel zur Vermittlung eines ansprechenden Aussehens auf der sichtbaren Seite lackiert sind, wozu oft ein vernetzter Polyurethan-basierter Lack verwendet wird. Dies hat zur Folge, dass solche Reste nicht einfach recycelt werden können, da sich bei normaler Verarbeitung Stippen (Oberflächenfehler) bilden und es zu einer Belagbildung bei der Herstellung neuer Folien kommen kann. Derartige Fehler und Einfallstellen sind für die Abnehmer der Kunstlederendprodukte nicht akzeptabel.

Vor diesem Hintergrund besteht ein Bedarf nach Verfahren, mit denen Folienrückstände oder Abfälle in den Herstellungsprozess zurückgeführt werden können, und bei denen die vorstehend geschilderten Probleme vermieden werden. Weiterhin besteht ein Bedarf nach einem Polyolefinfolien, die für eine Verarbeitung zu genarbten Folien- oder Oberfolien von Kunstledern geeignet sind, und die einen möglichst hohen Anteil an Polyolefinrezyklaten enthalten, ohne dass die Qualitätseigenschaften der Folien in relevantem Umfang beeinträchtigt werden.

Die vorliegende Erfindung befasst sich mit diesem Bedarf.

### Beschreibung der Erfindung

In einem ersten Aspekt betrifft die vorliegende Erfindung ein Verfahren zur Herstellung einer genarbten Folie oder eines genarbten, mehrlagigen Folienlaminats mit einer Oberfolie und zumindest einer Unterfolie oder zumindest einem Polyolefin basierten Schaum, wobei das Verfahren die folgenden Schritte umfasst:
i) Bilden einer Masse, die folgende Polymerbestandteile enthält:
   - 5 bis 75 Gew.-% eines Polyolefinrezyklats mit einem Schmelzpunkt < 165 °C,
   - 5 bis 75 Gew.-% eines Ethylenpolymers oder einer Mischung mehrerer Ethylenpolymere mit einer Dichte < 0,97 g/cm³,
   - 0 bis 50 Gew.-% eines Polypropylens mit einer Dichte < 0,92 g/cm³, und
ii) Formen der Masse zu einer Folie, und gegebenenfalls
iii) das Verbinden der in (ii) hergestellten Folie mit einer Unterfolie oder einem Schaum, wobei die Folie im Anschluss an den Schritt (ii) oder nach dem optionalen Schritt (iii) zum Aufbringen einer Narbe geprägt wird.

Im bezeichneten Verfahren kann die Folie aus der angegebenen Polymermasse bestehen, oder als Folienlaminat vorliegen, bei den die Oberfolie aus der angegebenen Polymermasse hergestellt wird. Als Unterfolie kann eine kompakte Unterfolie oder ein Schaum, wie z.B. ein Polyolefinbasierter Schaum, verwendet werden. Ein Schaum kann dabei gleichzeitig noch eine Schutzfunktion für die genarbte Oberfolie gegenüber einem rückseitig auf die Folie gepressten Trägermaterial bieten. Liegt die Unterfolie als Schaum vor, so weist dieser vorzugsweises eine Dichte im Bereich von 35 bis 200g/l auf. Die Unterfolie oder der Schaum kann vernetzt oder unvernetzt sein, wobei vernetzte Unterfolien und Schäume bevorzugt sind. In diesem Fall weist die Unterfolie oder der Schaum zweckmäßig einen Gelgehalt von weniger als 80% auf. Weiterhin oder alternativ ist die Unterfolie vorzugsweise aus einem Polyolefinschaum auf der Basis von Polyethylen und/oder Polypropylen aufgebaut.

Für das Bilden der Polymermasse können die Einzelsubstanzen unter geeigneten Bedingungen mit einander vermischt werden, vorzugsweise bei einer Temperatur im Bereich von oder oberhalb des Schmelzpunktes der Polymerbestandteile und/oder im Bereich von oder oberhalb des Schmelzpunktes des höchstschmelzenden Polymerbestandteils. Hierfür kann grundsätzlich jede Vorrichtung verwendet werden, mit der eine derartige Vermischung möglich ist. Bevorzugt erfolgt die Vermischung allerdings in einem Extruder mit einer oder mehreren Mischzonen, da bei einer Extrusion aus der geschmolzen Polymermasse direkt Folien hergestellt werden können.

Das Polyolefinrezyklats weist neben einem Schmelzpunkt von < 165 °C vorzugsweise einen Gelgehalt von mindestens 10 Gew.-%, vorzugsweise mindestens 15 Gew.-%, und weiter bevorzugt von mindestens 20 Gew.-% auf. Prozessbedingt ist der Gelgehalt des Polyolefinrezyklats nicht unbegrenzt, wobei als sinnvolle Obergrenze für den Gelgehalt 40 Gew.-%, insbesondere 35 Gew.-% und noch weiter bevorzugt 30 Gew.-% angegeben werden können. Der Gelgehalt wird für das Polyolefinrezyklat durch Extraktion des Rezyklats mit siedendem Xylol für 24h bestimmt, wobei der nach der Extraktion verbleibende feste Anteil dem Gelgehalt entspricht.

Bezogen auf die Gesamtzusammensetzung der Polymere in der Polymermasse sollte der Gelgehalt bevorzugt im Bereich von etwa 1 bis etwa 20 Gew.-%, weiter bevorzugt etwa 2 bis etwa 15 Gew.-% und noch weiter bevorzugt etwa 2,5 bis etwa 12 Gew.-% betragen.

Als besonders geeigneter Anteil an Polyolefinrezyklat in der Polymermasse kann ein Bereich von 10 bis 60 Gew.-% und insbesondere ein Bereich von 10 bis 45 Gew.-% angegeben werden, wobei die Gewichtsangaben jeweils auf das Gesamtgewicht der Polymere in der Polymerfolie bezogen sind. Da es sich bei dem Polyolefinrezyklat in den meisten Fällen um ein Polyolefinrezyklat handelt, dass aus lackierten Polyolefinfolien erzeugt wurde, enthält das Polyolefinrezyklat regelmäßig nachweisbare Mengen des Lacks, die sich jedoch auf die Produkt- und Verarbeitungseigenschaften nicht ungünstig auswirken. Ein Polyolefinrezyklat, das aus einem Ausgangsprodukt mit einem Polyurethanlack hergestellt wurde, enthält beispielswiese Polyurethanreste, die sich anhand von in der Infrarotspektroskopie gut sichtbaren Carbonyl-Absorptionsbanden nachweisen lassen, und in *de novo* hergestellten Polyolefinen nicht enthalten sind. Enthaltene Lackrestmengen, insbesondere in Form von Polyurethanresten, liegen normalerweise im Bereich von 1,3 Gew.-% bis zur Nachweisgrenze für Lackreste (bei Bestimmung mittels Infrarot-Spektroskopie), wobei Mengen von weniger als 0,9 Gew.-% bevorzugt, Mengen von weniger als 0,4 Gew.-% weiter bevorzugt, Mengen von weniger als 0,1 Gew.-% noch weiter bevorzugt, und Mengen von weniger als 0,05 Gew.-% noch weiter bevorzugt sind.

Eine weitere Eigenschaft, anhand der Polyolefinrezyklate von *de novo* hergestellten Polyolefinen unterschieden werden können, ist der Geruch. Während dieser bei *de novo* hergestellten Polyolefinen meist unspezifisch oder nicht feststellbar ist, führt die Aufarbeitung von verwendeten Polyolefin auf Grund von in die Polyolefine migrierte Substanzen und der thermischen Belastung bei der Aufarbeitung zur Entstehung von als unangenehm empfundenen Gerüchen. Um diese zu unterdrücken, kann dem Polyolefinrezyklat eine Geruchsunterdrückende Substanz beigemischt werden, z.B. in Form des Zinksalzes der Ricinolsäure oder Zeolithen. Entsprechend enthält das Polyolefinrezyklat im erfindungsgemäßen Verfahren und daraus hergestellt Produkte bevorzugt eine nachweisbare Menge an Geruchsunterdrückenden Substanzen, insbesondere Zinksalz der Ricinolsäure und/oder Zeolith, z.B. 1 bis 5 Gew.-% und insbesondere 1,5 bis 3 Gew.-%, jeweils bezogen auf die Gesamtmenge an Polyolefinrezyklat. Durch den Zusatz dieser Additive kann eine Geruchsnote nach VDA 270 (2018) von 2 bis 3 erreicht werden.

Polyolefinrezyklate werden innerhalb des erfindungsgemäßen Verfahrens zur Herstellung einer genarbten Folie durch ein Verfahren hergestellt, dass die Schritte
(a) Zerkleinern von Folienabfällen mit einem Anteil an vernetzten Polyolefinen, wobei die den Folienabfällen zugrundeliegenden Folien eine lackierte Polyolefin-basierte Folie, gegebenenfalls als Oberfolie zusammen mit einer kompakten Polyolefin-basierten Unterfolie oder einem Polyolefin basierten Schaum, umfassen,
(b) das Extrudieren der zerkleinerten Folienabfälle,
(c) das Filtrieren des geschmolzenen Extrudats,
zur Bildung des Polyolefinrezyklats umfasst. Demzufolge beinhaltet eine besonders bevorzugte Ausführungsform der Erfindung ein Verfahren, dass die eingangs angegebenen Schritte (i) bis (iii), und zur Erzeugung des in Schritt (i) einzubeziehenden Polyolefinrezyklats die Schritte (a) bis (c) umfasst. Die Folienabfälle weisen einen Anteil an vernetzten Polyolefinen auf, der bei einer mehrlagigen Folie in der Oberfolie (von der Sichtseite) und/oder in einer Unterfolie oder einem unter der Oberfolie verwendetem Schaum vorliegen kann. Ein für die weitere Verarbeitung besonders zweckmäßiges Polyolefinrezyklat kann insbesondere über eine Filtration im Schritt (c) realisiert werden, bei der ein Sieb mit einer Maschengröße im Bereich von 40 bis 300 µm und insbesondere 60 bis 100 µm verwendet wird. Verfahren mit den im Vorstehenden angegebenen Schritten (a) bis (c), sowie geeignete Vorrichtungen zur Durchführung solcher Verfahren, sind dem Fachmann z.B. aus der EP 3 088 157 A2 oder der DE 20 2019 102 066 U1 geläufig.

Die in diese Aufarbeitung einzubeziehenden Folienabfälle können aus Polyolefin-basierten Folien auf Basis von vernetzten Polyolefinen, und bevorzugt vernetzten Polyolefingemischen aus Polypropylen und Copolymeren von Ethylen und Propylen bestehen. Besonders bevorzugt ist es, wenn die Folienabfälle aus Polymermaterialien mit ähnlicher Zusammensetzung bestehen, wie das in das Verfahren in (i) einzubeziehende Ethylencopolymer oder die Mischung mehrerer Ethylencopolymere, gegebenenfalls in Kombination mit dem optionalen Polypropylen.

Als zweite Polymerkomponente kommt in der Polymermasse ein Ethylenpolymer oder einer Mischung mehrerer Ethylenpolymere mit einer Dichte < 0,97 g/cm³ zum Einsatz. Ethylenpolymere umfassen Ethylenhomopolymere und Ethylencopolymere mit anderen Monomeren. Besonders geeignete Ethylencopolymere sind z.B. Ethylencopolymere mit C₃ bis C₁₂ α-Olefinen, wie insbesondere Propylen, Butylen oder Hexylen, besonders bevorzugt sind

### Ethylen/Propylen-Copolymere.

Der Anteil dieser Ethylenpolymer in der Polymermasse beträgt bevorzugt 6 bis 60 Gew.-%, weiter bevorzugt 8 bis 50 Gew.-% und noch weiter bevorzugt 9 bis 40 Gew.-%.

Das Ethylenpolymer oder die Ethylenpolymere weisen bevorzugt einen Schmelzflussindex von < 10 g/10 Min (190°C/ 2,16 kg), insbesondere von < 5 g/10 Min (190°C/ 2,16 kg) und noch weiter bevorzugt < 2 g/10 Min (190°C/ 2,16 kg) auf.

Als dritte optionale Komponente enthält die Polymermasse ein Polypropylen. Das Polypropylen kann in einem geringen Umfang auch andere Olefine enthalten, z.B. Ethylen, jedoch nur in einer Menge die sich nicht wesentlich auf die Gebrauchseigenschaften des Polypropylens auswirkt. Entsprechend sollte der Anteil gegebenenfalls vorhandener andere Olefine einen Anteil von 5 Gew.-%, bevorzugt 2 Gew.-% und weiter bevorzugt 1 Gew.-% nicht übersteigen. Ganz besonders bevorzugt handelt es sich bei dem Polypropylen um ein reines Polypropylenhomopolymer.

Das Polypropylen kann als isotaktisches Polypropylen, ataktisches Polypropylen (auch als Polypropylen-R bezeichnet) oder als Polypropylen mit ataktischen und isotaktisches Segmenten (auch als Polypropylen-H bezeichnet) vorliegen, wobei Polypropylen-R und Polypropylen-H bevorzugt sind.

Das Polypropylen weist bevorzugt einen Schmelzflussindex von < 10 g/10 Min (230°C/ 2,16 kg), insbesondere von < 5 g/10 Min (230°C/ 2,16 kg) und noch weiter bevorzugt im Bereich von etwa 2 g/10 Min (230°C/ 2,16 kg) bis 0,5 g/10 Min (230°C/ 2,16 kg) auf.

Der Anteil eines in die Polymermasse einbezogenen Polypropylens beträgt bevorzugt 2 bis 40 Gew.-%, weiter bevorzugt 4 bis 30 Gew.-% und noch weiter bevorzugt 5 bis 20 Gew.-%.

In Bezug auf die vorgenannten Ethylenpolymere und Polypropylen, ist es, sofern letztere in der Polymermasse enthalten sind, bevorzugt, wenn diese in einem Verhältnis im Bereich von 1:1 bis 4:1 vorliegen, weiter bevorzugt ist ein Verhältnis im Bereich von 1,5:1 bis 3:1 und noch weiter bevorzugt ein Verhältnis im Bereich von etwa 2:1.

Als weitere optionale Komponente kann die in das erfindungsgemäße Verfahren einzubeziehende Polymermasse zusätzlich einen Polyolefinkautschuk enthalten, wobei Kautschukmaterialien, die Doppelbindungen enthalten als zusätzlich Polyolefinkautschuke besonders zweckmäßig sind, da über die enthaltenen Doppelbindungen eine weitergehende Vernetzung unterstützt wird, ohne dass hierzu niedermolekulare Verbindungen wie konventionelle Vernetzungshilfsmittel zugesetzt werden müssen. Als besonders geeigneter Polyolefinkautschuk ist an dieser Stelle z.B. Ethylen-Propylen-Dien-Kautschuk (EPDM) zu nennen.

Ein Polyolefinkautschuk kann in einer für die Einstellung der gewünschten Produkteigenschaften geeigneten Menge in die Polymermasse einbezogen, werden, wobei ein Anteil von 10 bis 60 Gew.-% als vorteilhaft, ein Anteil von 15 bis 50 gew.-% als besonders vorteilhaft und ein Anteil von 20 bis 40 Gew.- % als ganz besonders vorteilhaft angegeben werden können.

Neben den Polymerbestandteilen enthält die zur Folienherstellung eingesetzte Polymermasse vorzugsweise ein oder mehrere Hilfsmittel, wie Pigmente, Vernetzungshilfsmittel, Antioxidationsmittel, Lichtschutzmittel, Gleitmittel und/oder Alterungsschutzmittel.

Um z.B. einen ausreichenden Vernetzungsgrad bei der Vernetzung nach dem Prägeschritt einzustellen, wird vorzugsweise ein Vernetzungshilfsmittel zugesetzt. Dies gilt insbesondere für Polymermassen, die keine Polymerbestandteile mit Doppelbindungen (wie z.B. **EPDM** Polymere) enthalten, und bei denen die Kettenspaltung, die als Konkurrenzreaktion zur Vernetzung abläuft, eine merkliche Auswirkung zeigt. Hiervon betroffen sind insbesondere Polyolefine mit tertiären C-Atomen, wie beispielsweise Polypropylen.

Als Vernetzungshilfsmittel können zweckmäßig insbesondere ein- oder mehrfach ungesättigte Verbindungen, wie Acrylate von ein- oder mehrwertigen Alkoholen, so z. B. Trimethylolpropantriacrylat, Methacrylate von ein- oder mehrwertigen Alkoholen, z. B. Trimethylolpropantrimethacrylat, vinylfunktionelle Verbindungen, wie Styrol und Divinylbenzol, AllylVerbindungen, wie Triallylisocyanat, p-Chinondioxim, p,p'-Dibenzoylchinondioxim, N-Methyl-N,4-dinitrosoanilin, Nitrobenzol, Diphenylguanidin, oder Trimethylolpropan-N,N'-m-phenylendimaleimid eingesetzt werden. Besonders gute Ergebnisse werden bei Verwendung von Trimethylolpropantriacrylat, Trimethylolpropantrimethacrylat, Triallylcyanurat, Divinylbenzol, Ethylenglycoldimethacrylat, Diethylenglycoldimethacrylat und/oder Polyethylenglycoldimethacrylat erzielt. Die Vernetzungsmittel sollten in der für die Einstellung des gewünschten Vernetzungsgrads erforderlichen Menge in die Polymermasse einbezogen werden, wobei Mengen von bis zu etwa 6 Gew.-%, bevorzugt bis zu etwa 3 Gew.-% und besonders bevorzugt bis zu etwa 2 Gew.-%, bezogen auf den Gehalt der Masse an unvernetzten Polyolefinen, einsetzt werden.

Besonders vorteilhafte Antioxidantien für den Einsatz in den erfindungsgemäßen Polymermassen sind insbesondere Phenolderivate, Lactone und/oder Phosphite und als Lichtschutzmittel sterisch gehinderte Amine oder Benzotriazine, die zweckmäßig in einer Menge von weniger als etwa 5 Gew.-%, vorzugsweise bis zu 3,5 Gew.-%, insbesondere von 0,2 bis 2,5 Gew.-%, bezogen auf das Gesamtgewicht, in die Polymermasse einbezogen werden können.

Das Formen der Folie in Schritt (ii) umfasst in einer bevorzugten Ausführungsform die Bildung einer Folie aus der Masse; anschließende kann die Folie zum Aufbringen einer Narbe geprägt werden. Die Bildung der Folie erfolgt nach dem Fachmann bekannten Verfahren, wie z.B. Extrusions- und Kalandrierverfahren. Die Dicke der Folie ist dabei auf ein geeignetes Maß einzustellen, wobei eine Foliendicke im Bereich von 0,1 bis 2,0 mm als bevorzugt, und eine Dicke im Bereich von 0,2 bis 0,6 mm als besonders bevorzugt angegeben werden kann.

Durch den vor dem Prägen nur moderaten Gelgehalt der Folie lässt sich diese gut durch Prägewalzen prägen und die Geschwindigkeit der Prägewalzen kann hoch gewählt werden. Eine besonders geeignete Prägegeschwindigkeit, die im Rahmen des Verfahrens eingestellt werden kann, liegt bei etwa 5 bis 12 m/min und insbesondere 6 bis 10 m/min. Alternativ kann eine Prägung aber auch im Rahmen eines IMG bzw. Negativ-Tiefziehprozesses auf die Folie aufgebracht werden, wobei die Folie mit der Sichtseite auf einem mit dem Negativ einer Narbe versehenen Formkörper tiefgezogen wird.

Im Anschluss an die Prägung erfolgt eine weitergehende Vernetzung des Materials für eine hohe Narbfestigkeit, beispielsweise beim Tiefziehen und/oder Verformen. Die weitere Vernetzung erfolgt durch Strahlung, und insbesondere Elektronenstrahlen.

Dabei wird bei Kompaktfolien bevorzugt mit einer Bestrahlungsdosis von 10 bis 300 kGy, insbesondere 30 bis 150 kGy, bei Folienlaminaten mit einer Bestrahlungsdosis von 20 bis 150 kGy, insbesondere 30 bis 100 kGy, bestrahlt.

Auf die über das beschriebene Verfahren hergestellte Folie kann zur Vermittlung eines optisch vorteilhaften Eindrucks eine Lackierung aufgebracht werden, wobei bevorzugt ein Polyurethan-basierter Lack verwendet wird, der auf die gebildete Folie oder Oberfolie aufgebracht wird. Eine Lackierung kann vor oder nach einer Prägung aufgebracht werden, wobei ein Aufbringen vor der Prägung bevorzugt ist, weil ein einheitlicher Lackauftrag, insbesondere bei tieferen Narben und damit verbunden höheren Niveauunterschieden nur schwer realisiert werden kann.

Im optionalen Schritt (iii) des beschriebenen Verfahrens wird die in (ii) hergestellte Folie mit einer Unterfolie oder einem Polyolefin-basierten Schaum verbunden. Hierzu kann auf dem Fachmann bekannte Verfahren zum Verbinden von Folien zurückgegriffen werden, wie z.B. einem Verbinden durch Einbringen eines Klebstoffs oder einem Verbinden durch aktivieren einer oder beider Folien durch z.B. oberflächliches Anschmelzen und anschließendes Zusammenpressen der Folien. Gegebenenfalls kann zur Vermittlung einer guten Anbindung auch ein Primer, z.B. auf Basis von Polyurethan, auf die Folie aufgebracht werden.

Das vorbeschrieben Verfahren lässt sich vorteilhaft weiterbilden, indem die die in Schritt (ii) oder (iii) erhaltene genarbte Folie einem Positiv-Tiefziehverfahren unterzogen wird (d.h. einem Tiefziehverfahren, bei dem die genarbte Seite der Folie auf der dem Formwerkzeug entgegengesetzten Seite zu liegen kommt).

Alternativ dazu ist es auch möglich, dass die in Schritt (ii) aus der Polymermasse gebildete Folie, gegebenenfalls nach einem Verbinden mit einer Unterfolie oder einem Polyolefin basierten Schaum gemäß Schritt (iii), zum Aufbringen der Narbe einem Negativ-Tiefziehverfahren unterzogen wird, wobei ein Formwerkzeug mit dem Negativ der Narbe verwendet wird, und die Narbe durch die während des Formens in die Folie eingebrachte Energie auf die Folie übertragen wird.

Ein weiterer Aspekt der vorliegenden Erfindung betrifft eine genarbte Polymerfolie, die nach einem wie im vorstehenden beschriebenen Verfahren erhältlich ist. Die entsprechende genarbte Polymerfolie weist prozessbedingt, d.h. weil sie unter Einbezug eines Rezyklats hergestellt ist, in ihrem Inneren fein über die gesamte Folienschicht verteile Reste einer Lackierung auf, die auf Folien, aus denen das Rezyklat generiert wurde, aufgebracht war. Solche Reste sind, wie vorstehend erläutert, z.B. durch Infrarotspektroskopie nachweisbar.

Ein noch weiterer Aspekt der vorliegenden Erfindung betrifft die Verwendung einer genarbten Polymerfolie, wie vorstehend beschrieben, als Kunststoffdekormaterial oder Kunstleder, und insbesondere als Kunstlederbezug im Automobilbereich, insbesondere als Innverkleidung, bevorzugt als Armaturenverkleidung, oder in einem Kleidungsstück.

Die nach dem erfindungsgemäßen Verfahren hergestellten Folien oder Folienlaminate sowie die daraus erzeugten Formkörper zeigen zahlreiche Vorteile. Aufgrund der guten Prägbarkeit und Narbabbildung lassen sich die Folien oder Folienlaminate sehr gut herstellen und die Prägegeschwindigkeit kann, ohne Einbußen in der geprägten Struktur erleiden zu müssen, auf einem hohen Niveau gehalten werden, wodurch eine gute Effizienz des Herstellungsprozesses erreicht wird.

Die nach dem erfindungsgemäßen Verfahren hergestellten und zu Formkörpern umgebildeten Folien oder Folienlaminate eignen sich aufgrund ihres stabilen sauberen Narbbilds besonders als Innenverkleidung von Kraftfahrzeugen, z.B. als Armaturenverkleidung. Bedingt durch die lange Gebrauchsdauer von Kraftfahrzeugen sind gerade Innenverkleidungen von Kraftfahrzeugen hohen Beanspruchungen ausgesetzt. Einem stabilen sauberen Narbbild kommt dabei für den Qualitätseindruck der Kraftfahrzeuginnenverkleidung eine besondere Bedeutung zu. Bei dem erfindungsgemäßen Verfahren wird eine Störung der Homogenität des Narbbildes weitestgehend ausgeschlossen. Man erhält ein prägnantes Narbbild, und ein unerwünschtes Aufglänzen der Oberfläche wird verhindert.

Im Folgenden wird die Erfindung anhand einiger illustrierende Beispiel weiter veranschaulicht, die nicht in irgendeiner Form als beschränkend für den technischen Beitrag der Erfindung anzusehen sind.

### Beispiele

Im Rahmen der folgenden Beschreibung wurde die Shore A Härte gemäß der DIN ISO 7619-1 (2012) bestimmt. Der Glanz wurde gemäß nach dem Tiefziehen bei einer Verstreckung von 80 bis 100% unter einem Winkel von 60° mit einem Gerät Byk Gardner Mikro Gloss gemäß DIN 67530, 1982 bestimmt und wird als Gloss Units angegeben.

### Beispiel 1

Verschiedene Folien mit den in Tabelle 1 angegebenen Zusammensetzungen (jeweils in Gewichtsteilen) wurden durch Mischen der entsprechenden Polymere und Additive in einem Extruder bei Temperaturen im Bereich von 175 bis 195°C (Düsentemperatur 200°C) hergestellt. Die Folien wurden anschließend lackiert und einem IMG bzw. Negativ-Tiefziehprozess unterzogen. Das Tiefziehverhalten und die beobachteten Eigenschaften der hergestellten Folien sind ebenfalls in Tabelle 1 angegeben.

**Tabelle 1**

| **Substanz** | Vergleichsbeispiel 1 | Beispiel 1 | Beispiel 2 | Beispiel 3 |
|---|---|---|---|---|
| TPE-V¹ | 60 | | 50 | 60 |
| PP² | 14 | 19,3 | 5,3 | 10,5 |
| Ethylen/Propylen-Copolymer³ | 26 | 35,7 | 9,7 | 19,5 |
| TPO-Rezyklat⁴ | | 45 | 35 | 10 |
| Pigment | 1 | 1 | 1 | 1 |
| Stabilisator | 2 | 2 | 2 | 2 |

| **Eigenschaften** | | | | |
|---|---|---|---|---|
| Extrusionsverhalten | In Ordnung | In Ordnung | In Ordnung | In Ordnung |
| Tiefziehen im IMG⁵ Prozess | Prägnante Narbe, kein Aufglänzen | Prägnante Narbe, kein Aufglänzen | Prägnante Narbe, kein Aufglänzen | Prägnante Narbe, kein Aufglänzen |
| Glanz | 1,0 - 1,3 | 0,8 - 0,9 | 0,8 - 1,0 | 0,9 - 1,2 |
| Shore A | 85 | 86 | 86 | 85 |
| Haptik (manuell) | angenehm | angenehm | angenehm | angenehm |

| | | | | |
|---|---|---|---|---|
| ¹ = Thermoplastisches Elastomer bestehend aus 35 Gew.-% Polypropylen und 65 Gew.-% vernetztes Polyethylen-Polypropylen-Dien-Mischpolymer, MFI 15 g/10 min (230°C/ 10 kg), Gelgehalt 28%; ² = Polypropylen-R, Dichte 0,90 g/cm³, MFI 1,0 g/10 Min (230°C/ 2,16 kg); ³ = Copolymer von Ethylen und Propylen, Dichte 0,89 g/cm³, MFI 1 g/10 Min (190°C/ 2,16 kg); ⁴ = Gemisch aus Polyethylen, Polypropylen, MFI 0,5 bis 1 g/10 Min (230°C/ 2,16 kg); ⁵ = In Mold Graining Prozess. | | | | |

Aus der obigen Tabelle ist ersichtlich, dass das konventionell für die Herstellung der Polyolefinfolie eingesetzte TPE-V fast vollständig durch TPO Rezyklat ersetzt werden kann, ohne dass sich dies merklich auf die Verarbeitungs- und Endeigenschaften des Produkts auswirkt. Ebenso kann ein Teil des konventionell eingesetzten PPs und Ethylen/Propylen-Copolymers ohne wesentlichen Effekt auf das Endprodukt durch das TPO Rezyklat ersetzt werden.

### Beispiel 2

Verschiedene Folien mit den in Tabelle 2 angegebenen Zusammensetzungen (jeweils in Gewichtsteilen) wurden durch Mischen der entsprechenden Polymere und Additive in einem Extruder bei Temperaturen im Bereich von 175 bis 195°C (Düsentemperatur 200°C) hergestellt. Die Folien wurden anschließend lackiert und zum Aufbringen einer Narbe geprägt (Prägegeschwindigkeit 3 m/min (Vergleichsbeispiele), bzw. 8 m/min) und mit Elektronenstrahlen vernetzt. Abschließend wurden die so hergestellten genarbten Folien einem Positiv-Tiefziehprozess unterzogen. Die Vernetzungsparameter, das Tiefziehverhalten und die beobachteten Eigenschaften der hergestellten Folien sind ebenfalls in Tabelle 2 angegeben.

**Tabelle 2**

| Substanz | Vergleichs beispiel 1 | Vergleichs beispiel 2 | Beispiel 1 | Beispiel 2 | Beispiel 3 |
|---|---|---|---|---|---|
| TPE-V¹ | | 30 | | | |
| EPDM² | 30 | 20 | 33,25 | 33,25 | 33,25 |
| PP³ | 24,5 | 17,5 | 12,87 | 16,36 | 19,86 |
| Ethylen/Propylen-Copolymer⁴ | 45,5 | 32,5 | 23,88 | 30,39 | 36,89 |
| TPO-Rezyklat⁵ | | | 30 | 20 | 10 |
| Pigment | 1 | 1 | 1 | 1 | 1 |
| Covernetzer | 2 | 2 | | | |
| Vernetzungsdosis | 75 kGy | 75 kGy | 40 kGy | 40 kGy | 40 kGy |

| Eigenschaften | | | | | |
|---|---|---|---|---|---|
| Extrusionsverhalten | In Ordnung | In Ordnung | In Ordnung | In Ordnung | In Ordnung |
| Tiefziehen Positiv-Prozess | Prägnante Narbe, kein Aufglänzen | Prägnante Narbe, kein Aufglänzen | Prägnante Narbe, kein Aufglänzen | Prägnante Narbe, kein Aufglänzen | Prägnante Narbe, kein Aufglänzen |
| Glanz | 1,0 - 1,3 | 1,1 - 1,5 | 0,8 - 1,0 | 0,8 - 1,0 | 0,8 - 1,0 |
| Shore A | 91 | 90 | 85 | 88 | 90 |
| Haptik (manuell) | angenehm | angenehm | angenehm | angenehm | angenehm |

| | | | | | |
|---|---|---|---|---|---|
| ¹ = Thermoplastisches Elastomer bestehend aus 35Gew.-% Polypropylen und 65 Gew.-% vernetztes Polyethylen-Polypropylen-Dien-Mischpolymer, MFI 15 g/10 min (230°C/ 10 kg), Gelgehalt 28%; ² = Ethylen-Propylen-Dien-Mischpolymer, Dichte 0,89 g/cm³, MFI 1 g/10 min(230°C/ 2,16 kg); ³ = Polypropylen-H, Dichte 0,92 g/cm³, MFI 1,0 g/10 Min (230°C/ 2,16 kg); ⁴ = Copolymer von Ethylen und Propylen, Dichte 0,89 g/cm³, MFI 1 g/10 Min (190°C/ 2,16 kg); ⁵ = Gemisch aus Polyethylen, Polypropylen, MFI 0,5 - 1 g/10 Min (230°C/ 2,16 kg). | | | | | |

Aus der obigen Tabelle ist ersichtlich, dass sich das TPE-V in den Polymerzusammensetzungen durch TPO Rezyklat ersetzen lässt, ohne dass sich dies signifikant auf die Verarbeitungs- und Endeigenschaften des Produkts auswirkt. Für Zusatzmengen im Bereich von 10 bis 30 Gew.-% (bezogen auf die Gesamtmenge an Polymer) können günstige Produkteigenschaften realisiert werden.

## Patentansprüche

1. Verfahren zur Herstellung einer genarbten Folie oder eines genarbten, mehrlagigen Folienlaminats mit einer Oberfolie und zumindest einer Unterfolie oder zumindest einem Polyolefin basierten Schaum, wobei das Verfahren die folgenden Schritte umfasst:
Bilden eines Polyolefinrezyklats mit einem Schmelzpunkt < 165 °C durch
(a) Zerkleinern von Folienabfällen mit einem Anteil an vernetzten Polyolefinen, wobei die den Folienabfällen zugrundeliegenden Folien eine lackierte Polyolefin-basierte Folie, gegebenenfalls als Oberfolie zusammen mit einer kompakten Polyolefin-basierten Unterfolie oder einem Polyolefin basierten Schaum, aufweisen,
(b) das Extrudieren der zerkleinerten Folienabfälle,
(c) das Filtrieren des geschmolzenen Extrudats, bevorzugt über ein Sieb mit einer Maschengröße im Bereich von 40 bis 100 µm,
und
i) Bilden einer Masse, die folgende Polymerbestandteile enthält:
- 5 bis 75 Gew.-% des in (a) bis (c) hergestellten Polyolefinrezyklats,
- 5 bis 75 Gew.-% eines Ethylenpolymers oder einer Mischung mehrerer Ethylenpolymere mit einer Dichte < 0,97 g/cm³,
- 0 bis 50 Gew.-% eines Polypropylens mit einer Dichte < 0,92 g/cm³, und
ii) Formen der Masse zu einer Folie, und gegebenenfalls
iii) das Verbinden der in (ii) hergestellten Folie mit einer Unterfolie oder einem Polyolefin basierten Schaum, wobei die Folie im Anschluss an den Schritt (ii) oder nach dem optionalen Schritt (iii) zum Aufbringen einer Narbe geprägt wird, und wobei die genarbte Folie anschließend strahlenvernetzt wird.

2. Verfahren nach Anspruch 1, zusätzlich umfassend einen Schritt des Aufbringens einer Lackierung, bevorzugt eines Polyurethan-basierten Lacks, auf die gebildete Folie oder Oberfolie, bevorzugt bevor diese im Folgenden geprägt wird.

3. Verfahren nach mindestens einem der vorangehenden Ansprüche, wobei das Formen in Schritt ii) das Extrudieren der Polymermasse zu einer Folie umfasst.

4. Verfahren nach mindestens einem der vorangehenden Ansprüche, wobei die im Verfahren gebildete genarbte Folie Elektronenstrahlenvernetzt wird.

5. Verfahren nach mindestens einem der vorangehenden Ansprüche, wobei die Masse in Schritt (i) 10 bis 60 % und bevorzugt 10 bis 45 Gew.-% an Polyolefinrezyklat, bezogen auf das Gesamtgewicht der Polymere in der Polymerfolie, enthält.

6. Verfahren nach mindestens einem der vorangehenden Ansprüche, **dadurch gekennzeichnet, dass** das in der Masse in (i) eingesetzte Ethylenpolymer ein Copolymer mit einem Schmelzflussindex von kleiner 10 g/10 Min (190°C/ 2,16 kg) ist und bevorzugt in Form eines Ethylen-Propylen-Copolymers vorliegt.

7. Verfahren nach mindestens einem der vorangehenden Ansprüche, **dadurch gekennzeichnet, dass** das in der Masse in (i) eingesetzte Polypropylen ein Polypropylen-R oder ein Polypropylen-H ist.

8. Verfahren nach mindestens einem der vorangehenden Ansprüche, wobei die in Schritt (i) verwendete Masse weiterhin 10 bis 60 Gew.-% eines Kautschuks, bevorzugt eines Polyolefinkautschuks, und besonders bevorzugt eines Ethylen-Propylen-Dien-Kautschuks enthält.

9. Verfahren nach mindestens einem der vorangehenden Ansprüche, wobei die aus der Masse in (i) gebildete Folie eine Dicke im Bereich von 0,1 bis 2 mm und bevorzugt 0,2 bis 0,6 mm aufweist.

10. Verfahren nach mindestens einem der vorangehenden Ansprüche, wobei zusätzlich ein oder mehrere Additive, ausgewählt aus von Pigmenten, Vernetzungshilfsmitteln, Antioxidationsmittel, Lichtschutzmitteln, Gleitmitteln und Alterungsschutzmitteln in die Masse in Schritt (i) einbezogen wird.

11. Verfahren nach mindestens einem der vorangehenden Ansprüche, wobei die genarbte Folie in Schritt (iii) mit einer kompakten oder geschäumten Polymerschicht, vorzugsweise mit einer geschäumten Polymerschicht einer Dichte im Bereich von 35 bis 200 g/L und einem Gelgehalt von weniger als 80%, verbunden wird.

12. Verfahren nach mindestens einem der vorangehenden Ansprüche, wobei die im Verfahren erhaltene genarbte Folie einem Positiv-Tiefziehverfahren unterzogen wird oder die erhaltene Folie zum Aufbringen der Narbe einem Negativ-Tiefziehverfahren unterzogen wird.

## Claims

1. Method for producing a grained film or a grained, multi-ply film laminate with an upper film and at least one lower film or at least one polyolefin-based foam, the method comprising the following steps:
forming a polyolefin recyclate with a melting point < 165 °C by
(a) comminuting film wastes having a fraction of crosslinked polyolefins, where the films comprising the film wastes include a varnished polyolefin-based film, optionally as an upper film together with a compact polyolefin-based lower film or a polyolefin-based foam,
(b) extruding the comminuted film wastes,
(c) filtering the melted extrudate, preferably via a screen with a mesh size in the range from 40 to 100 µm,
and
i) forming a compound containing polymer constituents as follows:
- 5% to 75% by weight of the polyolefin recyclate produced in (a) to (c),
- 5% to 75% by weight of an ethylene polymer or a mixture of two or more ethylene polymers with a density < 0.97 g/cm³,
- 0% to 50% by weight of a polypropylene with a density < 0.92 g/cm³,
and
ii) moulding the compound into a film, and optionally
iii) joining the film produced in (ii) to a lower film or a polyolefin-based foam, the film being embossed following step (ii) or after optional step (iii) for applying a grain, and the grained film being subsequently radiation-crosslinked.

2. Method according to Claim 1, additionally comprising a step of applying a coating system, preferably a polyurethane-based varnish, to the film or upper film formed, preferably before this film is embossed in the following step.

3. Method according to at least one of the preceding claims, wherein the moulding in step ii) comprises the extrusion of the polymer compound into a film.

4. Method according to at least one of the preceding claims, wherein the grained film formed in the method is electron beam-crosslinked.

5. Method according to at least one of the preceding claims, wherein the compound in step (i) contains 10% to 60% and preferably 10% to 45% by weight of polyolefin recyclate, based on the total weight of the polymers in the polymer film.

6. Method according to at least one of the preceding claims, **characterized in that** the ethylene polymer used in the compound in (i) is a copolymer having a melt flow index of less than 10 g/10 min (190°C/2.16 kg) and is preferably in the form of an ethylene-propylene copolymer.

7. Method according to at least one of the preceding claims, **characterized in that** the polypropylene used in the compound in (i) is a polypropylene-R or a polypropylene-H.

8. Method according to at least one of the preceding claims, wherein the compound used in step (i) further contains 10% to 60% by weight of a rubber, preferably a polyolefin rubber, and more preferably an ethylene-propylene-diene rubber.

9. Method according to at least one of the preceding claims, wherein the film formed from the compound in (i) has a thickness in the range from 0.1 to 2 mm and preferably 0.2 to 0.6 mm.

10. Method according to at least one of the preceding claims, wherein additionally one or more additives selected from pigments, crosslinking assistants, antioxidants, light stabilizers, lubricants and anti-ageing agents is incorporated into the compound in step (i).

11. Method according to at least one of the preceding claims, wherein the grained film in step (iii) is joined to a compact or foamed polymer layer, preferably to a foamed polymer layer having a density in the range from 35 to 200 g/L and a gel content of less than 80%.

12. Method according to at least one of the preceding claims, wherein the grained film obtained in the method is subjected to a positive thermoforming process or the film obtained is subjected to a negative thermoforming process for applying the grain.

## Revendications

1. Procédé de fabrication d'un film grainé ou d'un stratifié de film grainé multicouche avec un film supérieur et au moins un film inférieur ou au moins une mousse à base de polyoléfine, le procédé comprenant les étapes suivantes :
la formation d'un recyclat de polyoléfine ayant un point de fusion < 165 °C par
(a) le broyage de déchets de films ayant une proportion de polyoléfines réticulées, les films à la base des déchets de films présentant un film à base de polyoléfine laqué, éventuellement en tant que film supérieur, conjointement avec un film inférieur compact à base de polyoléfine ou une mousse à base de polyoléfine,
(b) l'extrusion des déchets de films broyés,
(c) la filtration de l'extrudat fondu, de préférence sur un tamis ayant une taille de mailles dans la plage allant de 40 à 100 µm,
et
i) la formation d'une masse contenant les constituants polymères suivants :
- 5 à 75 % en poids du recyclat de polyoléfine produit en (a) à (c),
- 5 à 75 % en poids d'un polymère d'éthylène ou d'un mélange de plusieurs polymères d'éthylène ayant une densité < 0,97 g/cm³,
- 0 à 50 % en poids d'un polypropylène ayant une densité < 0,92 g/cm³,
et
ii) la mise en forme de la pâte en un film, et éventuellement
iii) la liaison du film produit en (ii) à un film inférieur ou à une mousse à base de polyoléfine, le film étant gaufré à la suite de l'étape (ii) ou après l'étape facultative (iii) pour appliquer un grain, et le film grainé étant ensuite réticulé par rayonnement.

2. Procédé selon la revendication 1, comprenant en outre une étape d'application d'un vernis, de préférence d'un vernis à base de polyuréthane, sur le film ou le film supérieur formé, de préférence avant que celui-ci ne soit gaufré par la suite.

3. Procédé selon au moins l'une quelconque des revendications précédentes, dans lequel la mise en forme à l'étape ii) comprend l'extrusion de la masse de polymère en un film.

4. Procédé selon au moins l'une quelconque des revendications précédentes, dans lequel le film grainé formé dans le procédé est réticulé par faisceau d'électrons.

5. Procédé selon au moins l'une quelconque des revendications précédentes, dans lequel la masse de l'étape (i) contient de 10 à 60 % et de préférence de 10 à 45 % en poids de recyclat de polyoléfine, par rapport au poids total des polymères dans le film polymère.

6. Procédé selon au moins l'une quelconque des revendications précédentes, **caractérisé en ce que** le polymère d'éthylène utilisé dans la masse en (i) est un copolymère ayant un indice de fluidité inférieur à 10 g/10 min (190 °C/2,16 kg) et se présentant de préférence sous la forme d'un copolymère d'éthylène et de propylène.

7. Procédé selon au moins l'une quelconque des revendications précédentes, **caractérisé en ce que** le polypropylène utilisé dans la masse en (i) est un polypropylène-R ou un polypropylène-H.

8. Procédé selon au moins l'une quelconque des revendications précédentes, dans lequel la masse utilisée dans l'étape (i) contient en outre de 10 à 60 % en poids d'un caoutchouc, de préférence d'un caoutchouc polyoléfinique, et de manière particulièrement préférée d'un caoutchouc éthylène-propylène-diène.

9. Procédé selon au moins l'une quelconque des revendications précédentes, dans lequel le film formé à partir de la masse en (i) présente une épaisseur dans la plage allant de 0,1 à 2 mm et de préférence de 0,2 à 0,6 mm.

10. Procédé selon au moins l'une quelconque des revendications précédentes, dans lequel, en outre, un ou plusieurs additifs choisis parmi des pigments, des adjuvants de réticulation, des antioxydants, des photoprotecteurs, des lubrifiants et des agents anti-vieillissement sont incorporés dans la masse à l'étape (i).

11. Procédé selon au moins l'une quelconque des revendications précédentes, dans lequel le film grainé est relié à l'étape (iii) à une couche de polymère compacte ou moussée, de préférence à une couche de polymère moussée ayant une densité dans la plage allant de 35 à 200 g/L et une teneur en gel inférieure à 80 %.

12. Procédé selon au moins l'une quelconque des revendications précédentes, dans lequel le film grainé obtenu dans le procédé est soumis à un procédé d'emboutissage positif ou le film grainé obtenu est soumis à un emboutissage négatif pour l'application du grain.
